Europäisches Patentamt

European Patent Office

Office européen des brevets

(11) Veröffentlichungsnummer : **0 079 463**
**B1**

# (12) EUROPÄISCHE PATENTSCHRIFT

(45) Veröffentlichungstag der Patentschrift :
18.09.85

(21) Anmeldenummer : 82109488.5

(22) Anmeldetag : 14.10.82

(51) Int. Cl.⁴ : **H 04 Q   3/00**

(54) **Verfahren und Schaltungsanordnung zur Erfassung von Schleifenstrom-Kriterien in einer Fernmeldeanlage.**

(30) Priorität : 17.10.81 DE 3141375

(43) Veröffentlichungstag der Anmeldung :
25.05.83 Patentblatt 83/21

(45) Bekanntmachung des Hinweises auf die Patenterteilung : 18.09.85 Patentblatt 85/38

(84) Benannte Vertragsstaaten :
BE FR GB IT SE

(56) Entgegenhaltungen :
DE-A- 2 850 905
DE-A- 2 901 739
DE-B- 2 828 418
FR-A- 2 329 126
US-A- 3 916 110
ELEKTRONIK, Band 30, Nr. 6, März 1981, Seiten 73-
79, München, DE., E. SCHMID et al.: "Integrierte
Schaltungen für moderne Vermittlungssysteme"

(73) Patentinhaber : Felten & Guilleaume Fernmeldeanlagen GmbH
Thurn- und -Taxis-Strasse 10 Postfach 4943
D-8500 Nürnberg 10 (DE)

(72) Erfinder : Robra, Jörg, Dr.
Hallerstrasse 7
D-8501 Heroldsberg (DE)
Erfinder : Goschin, Hans
Oberweiling Nr. 17
D-8436 Velburg (DE)

(74) Vertreter : Peuckert, Hermann
Philips Patentverwaltung GmbH Billstrasse 80 Postfach 10 51 49
D-2000 Hamburg 28 (DE)

**Beschreibung**

Die Erfindung betrifft ein Verfahren zur Erfassung von Schleifenstrom-Kriterien in einer Fernmeldeanlage, bei dem zwei zu einer Teilnehmerendeinrichtung symmetrisch angeordnete, voneinander unabhängige Konstantstromquellen einer Teilnehmerschaltung einen Schleifenstrom unabhängig von der Leitungslänge von Sprechadern zur Teilnehmerendeinrichtung konstant halten, bei dem mit Hilfe einer Meßvorrichtung der Schleifenstrom durch die Sprechadern gemessen und bei unterschiedlichen Stromwerten mittels einer Regeleinrichtung unterschiedliche Referenzspannungswerte für die Konstantstromquellen eingestellt werden, bei dem bei einer Symetrieverschiebung, welche durch Regeleinrichtung nicht mehr ausgeglichen werden kann, der Schleifenstrom auf einen maximalen Wert begrenzt ist und die Regeleinrichtung gesperrt wird und bei dem von einer zentralen Steuereinrichtung Mittel zum Rufen der Teilnehmerendeinrichtung angeschaltet werden.

Aus der DE-AS 25 56 157 ist eine Schaltungsanordnung zur Speisung einer Teilnehmerendeinrichtung in Fernmeldeanlagen gemäß dem Oberbegriff des Patentanspruchs 1 bekannt. Von dieser Schaltungsanordnung, in einer Fernsprechvermittlungsanlage als Teilnehmerschaltung bezeichnet, wird über Speiseadern die Teilnehmerendeinrichtung, z. B. Fernsprechapparat, mit Strom versorgt, wenn der Teilnehmer durch das Abheben eines Handapparates einen entsprechenden Kontakt schließt. Die Speiseeinrichtung, welche zwei symmetrisch zu den Sprechadern angeordnete Stromgeneratoren (Konstantstromquellen) aufweist, erzeugt einen von der Leitungslänge unabhängigen, konstanten Speisestrom. Bei Nebenstellenanlagen ist an den Fernsprechapparaten eine Erdungstaste vorgesehen, bei deren Betätigung durch den Teilnehmer eine der beiden Adern der zugehörigen Teilnehmerschleife geerdet wird. Damit bei Erdschluß der Sprechader kein höherer Schleifenstrom fließt, welcher zur Überhitzung der Speiseeinrichtung führen würde, ist eine Zenerdiode am gemeinsamen Anschlußpunkt zweier Symmetriewiderstände (Meß-vorrichtung) angeordnet. Zur Schleifenstromauswertung und zur Erfassung der Erdtastenbetätigung sind in der Teilnehmerschaltung Transistoren vorgesehen, die in die Teilnehmerschleife geschaltet sind und beim Abheben des Handapparats eine Spannung erzeugen, welche von einem zentralen Steuerwerk erkannt wird.

Aus der DE-AS 29 25 409 ist eine Schaltungsanordnung zum Erkennen der Meldung eines angerufenen Teilnehmers einer Fernsprechvermittlungsanlage bekannt. Aus den Nulldurchgängen des durch die Sprechadern fließenden Rufwechselstroms wird ein Steuertakt gewonnen, der ein Schieberegister dann weiterschaltet, wenn zum Zeitpunkt des Auftretens des Steuertaktes ein von einem sog. Schleifenstromindikatoren kommendes und das Melden des Teilnehmers kennzeichnendes Signal am Eingang des Schieberegisters anliegt. Zur Unterscheidung einer Teilnehmermeldung während der Rufpause von einer solchen während der Rufstromaussendung wird das Ausgangssignal des Schieberegisters, welches nach mehreren Nulldurchgängen des Rufwechselstromes erscheint, in einem UND-Gatter mit einem aus dem Ausgangssignal der Schleifenstromindikatoren abgeleiteten Signal verknüpft.

Weiterhin ist aus der US-PS 3, 916, 110 eine Schaltungsanordnung zur Speisung einer Teilnehmerendeinrichtung bekannt, welche eine unabhängige Konstantstromquelle und eine von dieser über eine Rückführung gesteuerte abhängige Konstantstromquelle enthält. Bei unterschiedlichen Stromwerten der von den Konstantstromquellen gelieferten Schleifenströme wird zur Herstellung der Symmetrie der Referenzspannungswert für die abhängige Konstantstromquelle verändert. Der US-PS 3,916,110 ist kein Hinweis zu entnehmen, wie das Schleifenstrom-Kriterium « Erdimpuls » ausgewertet werden soll. Der Hinweis, daß durch Auswerten der Ausgangssignale eines Differenzverstärkers, welcher in der Rückführung angeordnet ist, die Schleifenstrom-Kriterien « Schleifenschluß und Schleifenimpuls » ausgewertet werden können, gibt den tatsächlichen technischen Sachverhalt nicht richtig wieder.

Wie der US-PS 3, 916, 110 zu entnehmen ist, beruht die Symmetriebedingung der daraus bekannten Schaltungsanordnung auf der Gleichheit zweier Spannungen am Eingang des Differenzverstärkers. Im Symmetriefall, wenn die unabhängige und die abhängige Konstantstromquelle einen konstanten und gleich großen Schleifengleichstrom liefern, sind die beiden Spannungen gleich groß. Liefert die unabhängige Konstantstromquelle einen geringeren Konstantgleichstrom als die abhängige Konstantstromquelle, so erfolgt eine Potentialverschiebung am gemeinsamen Abgriff eines Spannungsteilers, bestehend aus zwei Widerständen. Diese Potentialverschiebung wird mittels des Differenzverstärkers in der abhängigen Konstantstromquelle kompensiert, indem die abhängige Konstantstromquelle nach Veränderung der Referenzspannungswerte den gleichen Konstantgleichstrom wie die unabhängige Konstantstromquelle liefert. Daraus folgt, daß die Schleifenstrom-Kriterien « Schleifenschluß und Schleifenimpuls » nicht durch Auswertung der Signale der Regeleinrichtung ausgewertet werden können, da bei beispielsweise « Schleifenschluß » keine Veränderung am Ausgang des Differenzverstärkers auftritt.

Bei diesen bekannten Schaltungsanordnungen erfolgt eine Auswertung des in den Sprechadern fließenden Schleifenstromes. Durch die Auswertung des bei Rufstromaussendung fließenden Gleich- und Wechselstroms und Erfassung mittels Transistoren oder Opto-Kopplern, können Überspannungen in der Teilnehmerschleife sowohl die Auswerteschaltung als auch nachgeschaltete Stromkreise der Schaltungsanordnung beschädigen. Außerdem haben die bekannten Schaltungsanordnungen den weiteren Nachteil, daß eventuell in der Teilnehmerschleife auftretende Impulsstörungen zu Fehlern bei einer digitalen Schleifenstromauswertung führen.

Aufgabe der Erfindung ist es, ein Verfahren zur Erfassung von Schleifenstrom-Kriterien anzugeben, das von Schleifen-Störimpulsen nicht beeinflußt wird und bei dessen Realisierung die zugehörige Schaltungsanordnung einfach aufgebaut und wirtschaftlich herstellbar ist.

Diese Aufgabe wird erfindungsgemäß dadurch gelöst, daß von mindestens einer Detektionschaltung bei Erdimpuls die Signale der Regeleinrichtung zur Einstellung von Referenzspannungswerten für die Konstantstromquellen und bei Schleifenschluß und Schleifenimpuls die Signale der Meßvorrichtung, welche in der Detektionsschaltung angeordnet ist, ausgewertet werden.

Durch die Auswertung der Signale der Regeleinrichtung ist die Schaltungsanordnung zur Realisierung des Verfahrens mit einem geringen Aufwand an preiswerten Bauelementen möglich. Bei den bekannten Schaltungsanordnungen detektiert die mit den Anschlüssen einer Teilnehmerschleife gekoppelte Detektionsschaltung, ob der Strom einen bestimmten Schwellenwert erreicht hat, der z. B. dem Schließvorgang der Teilnehmerschleife entspricht. Die erfindungsgemäßen Detektionsschaltungen werten dagegen die bei zeitlichen Änderungen des Schleifenstroms auftretenden Signale der Regeleinrichtung aus. Durch Dimensionierung der erfindungsgemäßen Detektionsschaltungen ist somit ein schnelleres Ansprechen bei Teilnehmermeldung möglich.

Weiterhin werden von der zentralen Steuereinrichtung die Ausgangssignale der Detektionsschaltungen ausgewertet. Bei Gesprächsfreiheit einer Teilnehmerendeinrichtung werden von der zentralen Steuereinrichtung durch Teilnehmerendeinrichtungs-Simulation mittels der Prüfeinrichtung die Teilnehmerschaltung und die Detektionsschaltungen geprüft.

Mit diesem Verfahren wird in vorteilhafter Weise erreicht, daß regelmäßig eine Prüfung von Teilnehmerschaltung und Detektionsschaltungen vorgenommen werden kann. Die dazu erforderlichen Bauelemente beanspruchen wenig Platz und sind preiswert zu erhalten.

In den Unteransprüchen ist eine Schaltungsanordnung zur Durchführung des Verfahrens nach Anspruch 1 und 2 angegeben.

Die Erfindung wird im folgenden anhand der Zeichnung näher beschrieben und erläutert. Es zeigt

Figur 1 eine erste Detektionsschaltung zur Erkennung der Erdtastenbetätigung und des Schleifenschlusses,

Figur 2 eine zweite Detektionsschaltung zur Erkennung von Schleifenschluß während der Rufanschaltung und

Figur 3 eine Prüfeinrichtung zur Teilnehmerendeinrichtungssimulation gemäß der Erfindung.

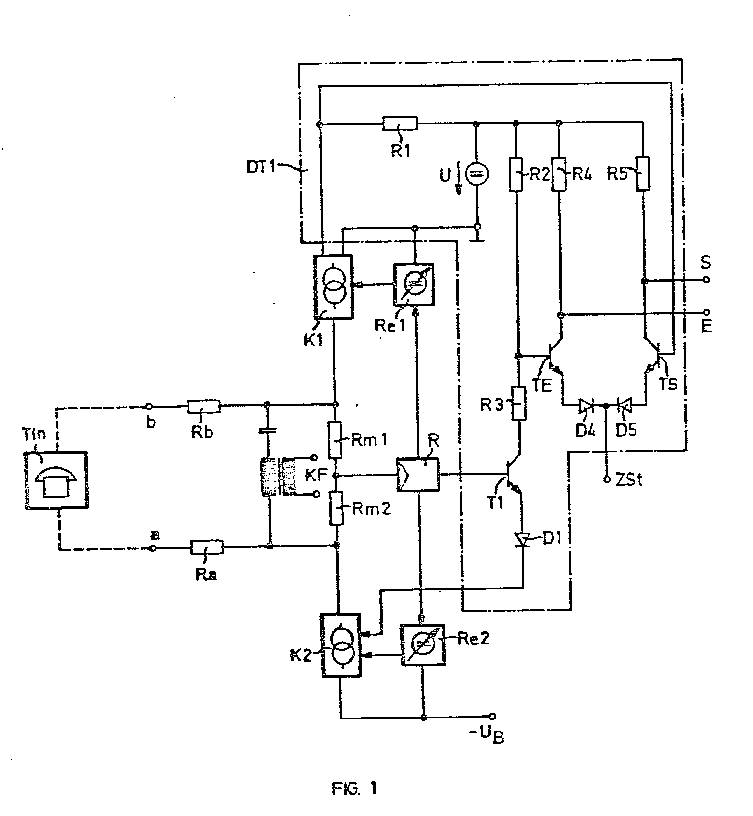

Die Teilnehmerschaltung nach Fig. 1 enthält zwei symmetrisch zu den mit a und b bezeichneten Sprechadern angeordnete Konstantstromquellen K1 und K2. In der Zeichnung ist der Leitungswiderstand der Sprechader a bzw. b, der je nach Länge der Leitung unterschiedlich sein kann, durch einen Widerstand Ra bzw. Rb dargestellt. An der Sekundärseite eines in der Zeichnung nicht näher bezeichneten Ankopplungsübertragers liegt im Verbindungsfall die Sprechwechselspannung an. Die Sekundärseite des Ankopplungsübertragers ist über einen in der Zeichnung nicht näher bezeichneten Kondensator mit Anschlußklemmen der Sprechadern a bzw. b verbunden. Die Anschlüsse der Primärwicklung des Ankopplungsübertragers werden einem Koppelfeld KF der Ankopplungsübertragers werden einem Koppelfeld KF der Vermittlungsstelle zugeführt.

Im Ausführungsbeispiel weisen die Konstantstromquellen K1 bzw. K2 jeweils zwei Transistoren und einen als Shunt wirkenden Widerstand, welcher im Kollektor-Emitter-Kreis der zweiten Transistoren des Transistorpaares angeordnet ist, auf. Die Basen der ersten Transistoren jedes Transistorpaares sind mit einem Spannungsteiler zur Vorgabe der Referenzspannung für die Konstantstromquellen K1 bzw. K2 verbunden. Zwischen diesen Spannungsteilern, in Fig. 1 mit Re1 bzw. Re2 bezeichnet, ist eine Regeleinrichtung R angeordnet.

Die Kollektoren der ersten Transistoren sind jeweils an einem Pol einer Betriebsspannungsquelle angelegt. Die Kollektoren der zweiten Transistoren sind über zwei in Serie geschaltete Widerstände Rm1 und Rm2 miteinander verbunden. Am gemeinsamen Anschluß der beiden Widerstände Rm1 und Rm2 ist die Regeleinrichtung R angelegt. Die Widerstandswerte der beiden Widerstände Rm1 und Rm2 sind gleichgroß, so daß an ihnen, bei konstantem und gleichgroßem Schleifenstrom in den Sprechadern a und b, jeweils die Hälfte der Sekundärspannung des Ankopplungsübertragers abfällt. Bei Verringerung des Spannungsabfalls an einem der beiden Widerstände Rm1 oder Rm2 erfolgt eine Potentialverschiebung am gemeinsamen Anschluß. Diese Potentialverschiebung bewirkt in der Regeleinrichtung R eine entsprechende Verschiebung der Referenzspannung für die Konstantstromquellen K1 bzw. K2, bis über den beiden Widerständen Rm1 bzw. Rm2 wieder jeweils die Hälfte der SekundaPrspannung des Ankopplungsübertragers abfällt. Bei Erdtastendruck oder Erdschluß erfolgt eine solche Symmetrieverschiebung des Spannungsabfalls an den Widerständen Rm1 und Rm2, welche durch die Regelung R (Symmetrieregelung) nicht ausgeglichen werden kann. Um eine thermische Überlastung einer der beiden Konstantstromquellen K1 bzw. K2 zu verhindern, wird die Symmetrieregelung R gesperrt und durch Einschalten eines Widerstands in eine Widerstandskette wird die Referenzspannung für die beiden Konstantstromquellen K1 und K2 gesenkt und der Schleifenstrom auf einen entsprechenden Wert erniedrigt. Diese Widerstandskette ist zwischen den Polen der Betriebsspannungsquelle angeordnet und enthält die Spannungsteiler zur Einstellung der Referenzspannungswerte und diesen Widerstand.

Zur Detektion von Schleifenschluß, Schleifenimpulsen und Erdimpulsen ist eine erste Detektionsschaltung DT1 mit den Konstantstromquellen K1 und K2, mit der Einrichtung Re1 zur Erzeugung der Referenzspannungswerte, mit der Regeleinrichtung R und mit einer zentralen Steuereinrichtung ZSt verbunden. Wenn der Schleifenstrom, den die Konstantstromquellen K1 und K2 zu liefern imstande sind, nicht fließen kann, da die Teilnehmerschleife nicht geschlossen ist, ist der zweite Transistor der Konstantstromquelle K1 gesperrt. Fließt ein Schleifenstrom, so arbeitet dieser Transistor im aktiven Bereich, so daß an dessen Kollektoranschluß ein Schleifenschluß detektiert werden kann. Die erste Detektionsschaltung DT1 enthält eine Spannungsquelle, deren einer Pol sowohl mit der ersten Konstantstromquelle K1 als auch mit der Einrichtung Re1 zur Erzeugung von Referenzspannungswerten verbunden ist. Der andere Pol ist über einen Widerstand R1 an die erste Konstantstromquelle K1 angeschlossen. Bei Schleifenschluß fließt über den Widerstand R1 ein Strom und die Auswertung des Spannungsabfalls am Widerstand R1 erfolgt mittels eines Transitors TS. Der Emitter des Transistors TS zur Erkennung des Schleifenschlusses ist über eine Diode D5 mit der zentralen Steuereinrichtung ZSt verbunden. Der Kollektor des Transistors TS, an dem ein Signal für Schleifenschluß an einer Klemme S abgegriffen wird, ist über einen Widerstand R5 an einem der Pole der Konstantspannungsquelle angeschaltet. Eine Detektion auf Schleifenschluß erfolgt dann, wenn im Ausführungsbeispiel die zentrale Steuereinrichtung ZSt Massepotential an die Katode der Diode D5 anlegt. Werden die Emitter der beiden Transistoren TE und TS fest auf Massepotential gelegt, so ist der Schaltungsaufwand in der Detektionsschaltung DT1 geringer.

In der Detektionsschaltung DT1 ist über einen Spannungsteiler mit den Widerständen R2 und R3, über die Kollektor-Emitter-Strecke eines ersten Transistors T1 und über eine Diode D1 ein Pol der Spannungsquelle an die zweite Konstantstromquelle K2 angeschaltet. Die Basis des ersten Transistors T1 ist mit der Regeleinrichtung R verbunden. Ist die Regeleinrichtung R nicht blockiert, so ist der Transistor T1 gesperrt. Erdtastendruck oder Erdschluß können über die Symmetrieregelung R und die Konstantstromquellen K1 und K2 nicht ausgeglichen werden und der Transistor T1 wird durchgeschaltet. Der im Kollektor-Emitter-Kreis des Transistors T1 fließende Strom erzeugt am Spannungsteiler R2 und R3 einen Spannungsabfall, der zum Durchschalten eines Transistors TE zur Erkennung der Erdtastenbetätigung führt. Dazu ist die Basis des Transistors TE mit dem gemeinsamen Anschluß des Spannungsteilers mit den iderständen R2 und R3 verbunden. Der Kollektor des Transistors TE ist über einen Widerstand R4 mit einem Pol der Spannungsquelle verbunden. Der Emitter des Transistors TE ist über eine Diode D4, welche entgegen der Durchlaßrichtung der Diode D5 geschaltet ist, mit der zentralen Steuereinrichtung ZSt verbunden. Am Kollektor des Transistors TE ist, bei Anschaltung eines bestimmten Potentials durch die zentrale Steuereinrichtung ZSt an den gemeinsamen Katodeanschluß der beiden Dioden D4 und D5, ein Signal zur Erkennung der Erdtastenbetätigung an einer Klemme E abgreifbar. Die Detektionsschaltung DT1 ist so dimensioniert, daß deren Leistungsverbrauch gering ist.

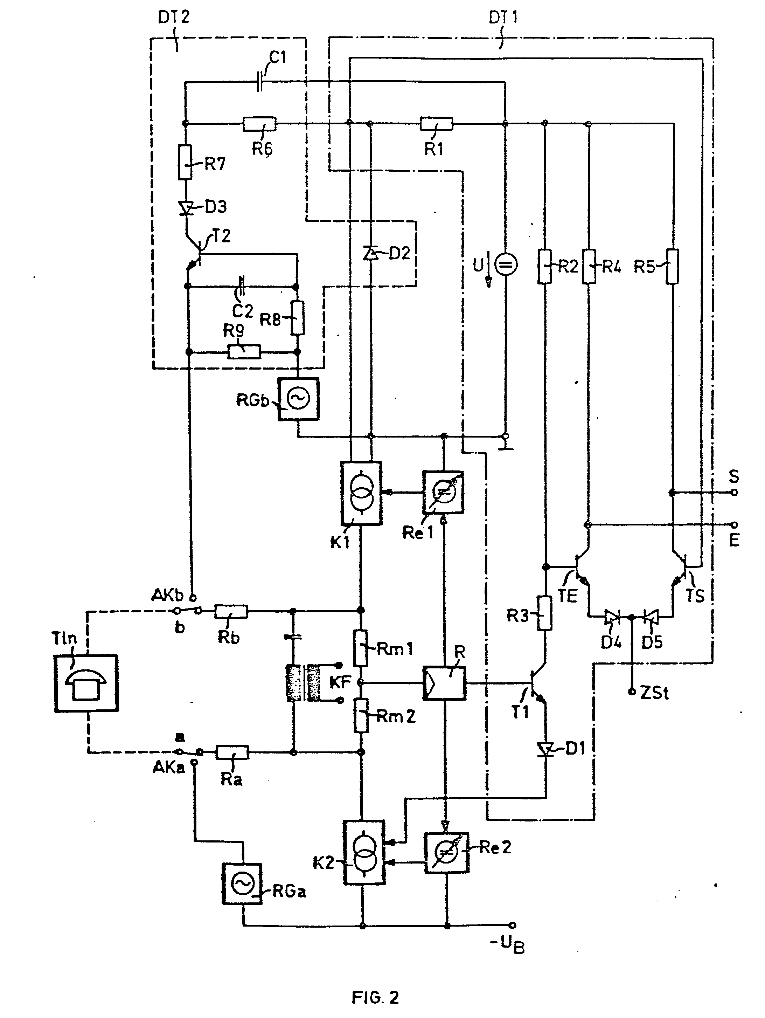

In Fig. 2 ist eine zweite Detektionsschaltung DT2 mit der ersten Detektionsschaltung DT1 (Fig. 1), mit der Konstantstromquelle K1, mit einem Rufgenerator RGb und einem Anschaltkontakt AKb verbunden. Der Anschaltkontakt AKb dient zur Rufeinspeisung in die Sprechader b. Der Rufgenerator RGb ist mit einem Anschluß der Betriebsspannungsquelle verbunden. Der andere Anschluß ist über einen Widerstand R9 an den Anschaltkontakt AKb angelegt. Mit dem gemeinsamen Anschluß der Widerstands R9 und des Rufgenerators RGb ist ein Anschluß eines durch einen Widerstand R8 und einen Kondensator C2 gebildeten RC-Glieds verbunden. Der gemeinsame Anschluß des RC-Glieds (R8, C2) ist an die Basis eines Transistors T2 angeschaltet. Der Kondensator C2 ist parallel zur Basis-Emitter-Strecke des Transistors T2 angeordnet. Der Kollektor des Transistors T2 ist über eine Diode D3 und einen Widerstand R7 mit einem Anschluß eines weiteren, mittels eines Widerstandes R6 und eines Kondensators C1 gebildeten, RC-Glieds verbunden. Der zweite Anschluß des Widerstands R6 von diesem RC-Glied ist an die Konstantstromquelle K1 und an die Katode einer, zwischen erster Detektionsschaltung DT1 und Konstantstromquelle K1 angeordneten, Diode D2 angelegt. Der zweite Anschluß des Kondensators Cl von diesem RC-Glied ist mit einem Pol der Spannungsquelle der ersten Detektionsschaltung DT1 verbunden.

Wenn eine Teilnehmerendeinrichtung Tln über die Sprechadern a und b gerufen wird, dann fließt ein Rufstrom über: den Pluspol der Betriebsspannungsquelle, den Rufgenerator RGb, den Widerstand R9 und den Anschaltkontakt AKb zur Sprechader b, einen Wecker der Teilnehmerendeinrichtung Tln, die Sprechader a, einen Anschaltkontakt AKa, einen Rufgenerator RGa zum Minuspol der Betriebsspannungsquelle. Die Detektionsschaltung DT2 soll ein Ausgangssignal am Anschluß S liefern, wenn beim Abnehmen des Handapparats in der Teilnehmerendeinrichtung

Tln ein Gleichstromfluß zustandekommt. Die Detektionsschaltung DT2 soll nicht ansprechen, wenn ein Rufwechselstrom über die Sprechadern a, b fließt.

Die Rufspannungserzeugung erfolgt im dargestellten Ausführungsbeispiel derart, daß die halbe Rufwechselspannung (30 V effektiv) erdsymmetrisch der Sprechader b und die halbe Rufwechselspannung (30 V effektiv) mit einer überlagerten Gleichspannung (Gleichspannung der Betriebsspannungsquelle z. B. − 48 V) der Sprechader a zugeführt wird. Die Rufspannung enthält also einen. Gleichspannungsanteil. Es kommt. ein Gleichstromfluß durch den Widerstand R9 zustande, wenn der Handapparat in der Teilnehmerendeinrichtung Tln abgehoben wird.

Der Rufstrom erzeugt an dem in die Zuführung zur Sprechader b eingeschleiften Widerstand R9 bei geöffneter Schleife einen reinen Wechselspannungsabfall. Durch das RC-Glied, gebildet aus dem Widerstand R8 und dem Kondensator C2, wird diese Wechselspannung so gedämpft, daß der Transistor T2 entweder nicht oder nur in den Scheiteln des Rufstromes durchgeschaltet wird. Wird der Transistor T2 in den Scheiteln des Rufstromes durchgeschaltet, so fließt dennoch kein Strom vom Pluspol der Spannungsquelle in der Detektionsschaltung DT1 über den Widerstand R1 , den Widerstand R6, den Widerstand R7 und die Diode D3, da sich der Emitter des Transistors T2 auf positivem Potential befindet und dadurch die Diode D3 gesperrt ist.

Der bei geschlossener Schleife fließende Gleichstrom über den Widerstand R9 und der damit verbundene Gleichspannungsabfall bewirkt ein Durchschalten des Transistors T2. In den Zeitabschnitten, in denen der Emitter des Transistors T2 auf negativem Potential liegt, fließt ein Strom über die Diode D3 und den Widerstand R7. Dieser intermittierende Strom lädt den Kondensator CI auf. Dadurch wird das Potential am gemeinsamen Anschluß der Widerstände R6 und R1 ebenfalls negativer. Dieser Anschluß ist erfindungsgemäß mit der Basis des Transistors TS verbunden. Infolge der Potentialänderung wird der Transistor TS gesperrt.

Wie bereits anhand der Fig. 1 beschrieben, kann dadurch an der Klemme S der Schleifenschluß erkannt werden. Die Diode D2 begrenzt dabei die am Basisanschluß des Transistors TS auftretende negative Spannung.

Die Detektionsschaltung DT2 ist so zu dimensionieren, daß kurze Stromflußimpulse nicht aursreichen, um den Kondensator CI auf ein entsprechendes Potential aufzuladen. Diese kurzen Stromflußimpulse können beispielsweise dadurch entstehen, daß bei reinem Rufwechselstrom eine Phasenverschiebung zwischen Rufstrom und Rufspannung auftritt.

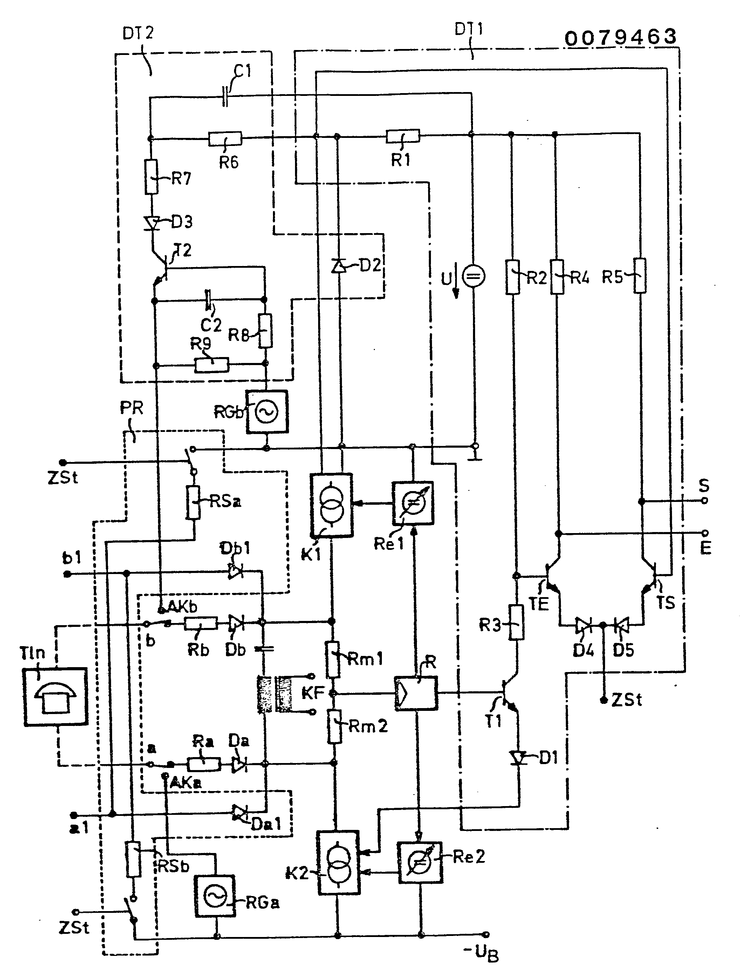

In Fig. 3 ist eine Prüfeinrichtung Pr mit den beiden Polen der Betriebsspannungsquelle verbunden. Die Prüfeinrichtung Pr ist weiterhin an ein weiteres Anschlußpaar bl, al angeschaltet. Die beiden Pole der Betriebsspannungsquelle sind über jeweils einen von der zentralen Steuereinrichtung ZSt schließbaren Anschlußkontakt an einen Widerstand RSb bzw. RSa angelegt. Das Anschlußpaar bl, al ist über eine Diode Dbl bzw. Dal mit der Sekundärseite des Ankopplungsübertragers verbunden. Mit der Sekundärseite des Ankopplungsübertragers ist weiterhin die Katode einer in der Speiseader a angeordneten Diode Da bzw. die Anode einer in der Speiseader b angeordneten Diode Db angeschlossen. Durch die Anordnung der Dioden Dbl, Dal bzw. Db, Da im Anschlußpaar bzw. im Sprechadernpaar wird eine Entkopplung der beiden Leitungspaare vorgenommen.

Wird von der zentralen Steuerung ZSt der Anschaltkontakt zum Anschalten des Widerstandes RSa geschlossen, so wird ein Erdschluß für die Detektionsschaltung DTI simuliert. Werden von der zentralen Steuerung ZSt die Anschaltkontakte für die Widerstände RSa bzw. RSb gleichzeitig geschlossen, so kann ein Schleifenschluß für die Detektionsschaltung DTI simuliert werden.

Die Widerstände RSa bzw. RSb werden so dimensioniert, daß die für die Auswertung mittels der Detektionsschaltung DTI ungünstigsten Situationen simuliert werden können. Bei der Realisierung sind mehrere gleichartige Speise- und Detektionsschaltungen zu einer Baugruppe zusammengefaßt. Zur Durchführung der beschriebenen Teilnehmersimulation werden alle Klemmen bl bzw. al einer Baugruppe miteinander verbunden. Durch das gleichzeitige Anschalten der Widerstände RSa bzw. RSb in jeder Prüfeinrichtung Pr einer Baugruppe ist das gleichzeitige Prüfen jeder Speise- und Detektionsschaltung möglich. Weiterhin ist von Vorteil, daß die beschriebenen Speise- und Detektionsschaltungen gegenüber bekannten Schaltungsanordnungen ein wesentlich geringeres Bauvolumen, einen erheblich geringeren Leistungsverbrauch und geringere Kosten aufweisen.

**Patentansprüche**

1. Verfahren zur Erfassung von Schleifenstrom-Kriterien bei einer Fernmeldeanlage, bei dem zwei zu einer Teilnehmerendeinrichtung (Tln) symmetrisch angeordnete, voneinander unabhängige Konstantstromquellen (K1, K2) einer Teilnehmerschaltung einen Schleifenstrom Unabhängig von der Leitungslänge von Sprechadern (a, b) zur Teilnehmerendeinrichtung (Tln) konstant halten, bei dem mit Hilfe einer Meßvorrichtung (R1) der Schleifenstrom durch die Sprechadern (a, b) gemessen und bei unterschiedlichen Stromwerten mittels einer Regeleinrichtung (R) unterschiedliche Referenzspannungswerte für die Konstantstromquellen (K1, K2) eingestellt werden, bei dem bei einer Symmetrieverschiebung, welche durch die Regeleinrichtung (R) nicht mehr ausgeglichen werden kann, der Schleifenstrom auf einen maximalen Wert begrenzt ist und die Regeleinrichtung (R) gesperrt wird und bei dem von einer zentralen Steuereinrichtung (ZSt) Mittel zum Rufen der

Teilnehmerendeinrichtung (TIn) angeschaltet werden, dadurch gekennzeichnet, daß von mindestens einer Detektionsschaltung (DT1, DT2) bei Erdimpuls die Signale der Regeleinrichtung (R) zur Einstellung von Referenzspannungswerten für die Konstantstromquellen (K1, K2) und bei Schleifenschluß und Schleifenimpuls die Signale der Meßvorrichtung (R1), welche in der Detektionsschaltung (DT1) angeordnet ist, ausgewertet werden.

2. Verfahren nach Anspruch 1, bei dem eine Prüfeinrichtung (PR) zur Teilnehmerendeinrichtungs-Simulation vorgesehen ist, dadurch gekennzeichnet, daß von der zentralen Steuereinrichtung (ZSt) die Ausgangssignale der Detektionsschaltungen (DT1, DT2) ausgewertet werden und daß bei Gesprächsfreiheit einer Teilnehmerendeinrichtung (TIn) von der zentralen Steuereinrichtung (ZSt) durch Teilnehmerendeinrichtungs-Simulation mittels der Prüfeinrichtung (Pr) Teilnehmerschaltung (TIn) und Detektionsschaltungen (DT1, DT2) geprüft werden.

3. Schaltungsanordnung zur Erfassung von Schleifenstrom-Kriterien bei einer Fernmeldeanlage, zur Durchführung des Verfahrens nach Anspruch 1 und 2 bei der zwei zu einer Teilnehmerendeinrichtung (TIn) symmetrisch angeordnete, voneinander unabhängige Konstantstromquellen (K1, K2) einer Teilnehmerschaltung einen Schleifenstrom unabhängig von der Leitungslänge von Sprechadern (a, b) zur Teilnehmerendeinrichtung (TIn) konstant halten, bei der mit Hilfe einer Meßvorrichtung (R1) der Schleifenstrom durch die Sprechadern (a, b) gemessen und bei unterschiedlichen Stromwerten mittels einer Regeleinrichtung (R) unterschiedliche Referenzspannungswerte für die Konstantstromquellen (K1, K2) eingestellt werden, bei der bei einer Symmetrieverschiebung, welche durch die Regeleinrichtung (R) nicht mehr ausgeglichen werden kann, der Schleifenstrom auf einen maximalen Wert begrenzt und die Regeleinrichtung (R) gesperrt wird und bei der von einer zentralen Steuereinrichtung (ZSt) Mittel zum Rufen der Teilnehmerendeinrichtung (TIn) angeschaltet werden, dadurch gekennzeichnet, daß eine erste Detektionsschaltung (DT1) den Konstantstromquellen (K1, K2) mit einer der beiden Einrichtung (Rel) zur Erzeugung von Referenzspannungswerten und mit der Regeleinrichtung (R) verbunden ist.

4. Schaltungsanordnung nach Anspruch 3, dadurch gekennzeichnet, daß die erste Detektionsschaltung (DT1) eine Spannungsquelle (U) enthält, deren einer Pol sowohl mit der ersten Konstantstromquelle (K1) als auch mit der Einrichtung (Rel) zur Erzeugung von Referenzspannungswerten verbunden ist und deren anderer Pol über einen Widerstand (R1) an eine erste Konstantstromquelle (K1) und über einen Spannungsteiler (R2, R3), die Kollektor-Emitter-Strecke eines ersten Transistors (T1), sowie über eine Diode (D1) an eine zweite Konstantstromquelle (K2) angeschaltet ist und daß die Basis des ersten Transistors (T1) mit der Regeleinrichtung (R) verbunden ist.

5. Schaltungsanordnung nach Anspruch 3 und 4, dadurch gekennzeichnet, daß an einem Pol der Spannungsquelle über jeweils einen Widerstand (R4, R5) ein Transistor (TE) zur Erkennung der Erdtastenbetätigung und ein Transistor (TS) zur Erkennung des Schleifenschlusses angeschaltet ist, daß die Emitter der beiden Transistoren (TE, TS) miteinander verbunden und am gemeinsamen Anschluß von Betriebsspannungsquelle und der Spannungsquelle in der ersten Detektionsschaltung (DT1) angeschlossen sind, daß die Basis des Transistors (TS) zur Erkennung des Schleifenschlusses mit der ersten Konstantstromquelle (K1) verbunden ist und daß am gemeinsamen Anschluß des Spannungsteilers (R2, R3) die Basis des Transistors (TE) zur Erkennung der Erdtastenbetätigung angeschlossen ist.

6. Schaltungsanordnung nach Anspruch 5, dadurch gekennzeichnet, daß die Emitter der beiden Transistoren (TE, TS) über zwei gegeneinander geschaltete Dioden (D4, D5) miteinander verbunden sind und daß am gemeinsamen Katodenanschluß der beiden Dioden (D4, D5) die zentrale Steuereinrichtung (ZSt) angeschlossen ist.

7. Schaltungsanordnung zur Durchführung des Verfahrens nach Anspruch 1 und 2, dadurch gekennzeichnet, daß eine zweite Detektionsschaltung (DT2) mit einer ersten Detektionsschaltung (DT1), mit der ersten Konstantstromquelle (K1), mit einem Rufgenerator (RGb) und mit einem Anschaltkontakt (AKb) zur Rufeinspeisung in die Sprechadern verbunden ist.

8. Schaltungsanordnung nach Anspruch 6, dadurch gekennzeichnet, daß jeder Rufgenerator (RGb, RGa) mit einem der Pole der Betriebsspannungsquelle (U, UB) verbunden ist und daß einer der Rufgeneratoren (RGb) mit dem anderen Anschluß über einen Widerstand (R9) mit dem Anschlatkontakt (AKb) und der andere Rufgenerator (RGa) mit dem anderen Anschaltkontakt (AKa) verbunden ist.

9. Schaltungsanordnung nach Anspruch 7, dadurch gekennzeichnet, daß ein Anschluß eines RC-Gliedes (R8, C2) mit dem gemeinsamen Anschluß des Widerstands (R9) und des Rufgenerators (RGb) verbunden ist, daß der gemeinsame Anschluß des RC-Gliedes an die Basis eines Transistors (T2) angeschaltet ist und daß der Kondensator (C2) des RC-Gliedes parallel zur Basis-Emitter-Strecke des Transistors (T2) angeordnet ist.

10. Schaltungsanordnung nach Anspruch 8, dadurch gekennzeichnet, daß der Kollektor des Transistors (T2) über eine Diode (D3) und einen Widerstand (R7) mit einem weiteren RC-Glied (R6, C1) verbunden ist, daß der zweite Anschluß des Widerstands (R6) von diesem RC-Glied an die erste Konstantstromquelle (K1) und an die Katode einer, zwischen erster Detektionsschaltung (DT1) und erster Konstantstromquelle (K1) angeordneten, Diode (D2) angelegt ist und daß der zweite Anschluß des Kondensators (C1) von diesem RC-Glied mit einem Pol der Spannungsquelle in der ersten Detektionsschaltung (DT1) verbunden ist.

11. Schaltungsanordnung zur Realisierung des Verfahrens nach Anspruch 1 und 2, dadurch gekennzeichnet, daß die Prüfeinrichtung (Pr) mit Polen einer Betriebsspannungsquelle, (U,-UB) mit einem Anschlußpaar (bl, al) und mit der zentralen Steuereinrichtung (ZSt) verbunden ist.

12. Schaltungsanordnung nach Anspruch 10, dadurch gekennzeichnet, daß jeweils ein Pol der Betriebsspannungsquelle (U,-UB) über einen von der zentralen Steuereinrichtung (ZSt) schließbaren Anschaltkontakt und einen Widerstand (RSb oder RSa) an das Anschlußpaar (bl, al) angeschaltet ist und daß dieses Anschlußpaar (bl, al) über jeweils eine Diode (Dbl oder Dal) mit einer entgegengerichteten, in dem Sprechadernpaar (b, a) angeordneten, Diode (Db oder Da) verbunden ist.

**Claims**

1. A method of determining loop current criteria in a telecommunication exchange, in which two subscriber circuit constant-current sources (K1, K2) which are independent of each other and are arranged symmetrically with respect to a subscriber terminal unit (Tln), keep a loop current constant irrespective of the line length of speech wires (a, b) to the subscriber terminal unit (Tln), in which the loop current through the speech wires (a, b) is measured with the aid of a measuring device (R1) and when different current values are measured, different reference voltage values are set for the constant-current sources (K1, K2) by means of a control unit (R), in which in the event of a shift in the symmetry which the control unit (R) is no longer capable of compensating the loop current is limited to a maximum value and the control unit (R) is blocked, and in which a central control arrangement (Zst) switches means for calling the subscriber terminal unit (Tln) into the circuit, characterized in that at least one detection circuit (DT1, DT2) evaluates at the occurrence of a ground pulse, the signals from the control unit (R) for setting the reference voltage values for the constant-current sources (K1, K2) and, when the loop is closed and at the occurrence of a loop pulse, evaluates the signals from the measuring arrangement (R1) provided in the detection circuit (DT1).

2. A method as claimed in Claim 1, in which a test arrangement (PR) is provided for simulating the subscriber terminal unit, characterized in that the central control arrangement (ZSt) evaluates the output signals of the detection circuits (DT1, DT2) and that when a subscriber terminal arrangement (Tln) is not busy the central control arrangement (ZSt) tests via subscriber terminal arrangement-simulation the subscriber circuit (Tln) and the detection circuits (DT1, DT2) by means of the test arrangement (PR).

3. A circuit arrangement for determining loop current criteria in a telecommunication exchange, for putting the method as claimed in Claims 1 and 2 into effect, in which two subscriber circuit constant-current sources (K1, K2) which are independent of each other and are arranged symmetrically with respect to a subscriber terminal unit (Tln) keep a loop current constant irrespective of the line length of speech wires (a, b) to the subscriber terminal arrangement (Tln), in which the loop current through the speech wires (a, b) is measured with the aid of a measuring device (R1) and when different current values are measured different reference voltage values are set for the constant-current sources (K1, K2) by means of a control unit (R), in which in the event of a shift in the symmetry which the control unit (R) is no longer capable of compensating, the loop current is limited to a maximum value and the control unit (R) is blocked, and in which a central control arrangement (ZSt) switches means for calling the subscriber terminal arrangement (Tln) into the circuit, characterized in that a first detection circuit (DT1) is connected to the constant current sources (K1, K2), to one of the two arrangements (RE1) for producing reference voltage values and to the control arrangement (R).

4. A circuit arrangement as claimed in Claim 3, characterized in that the first detection circuit (DT1) comprises a voltage source (U) one terminal of which is connected to both the first constant-current source (K1) and to the arrangement (Rel) for producing reference voltage values and the other terminal of which is connected via a resistor (R1) to the first constant-current source (K1) and via a voltage divider (R2, R3), the collector-emitter path of a first transistor (T1) and also via a diode (D1) to the second constant-current source (K2) and in that the base of the first transistor (T1) is connected to the control arrangement (R).

5. A circuit arrangement as claimed in Claims 3 and 4, characterized in that a transistor (TE) for detecting that the ground key has been operated and a transistor (TS) for detecting closure of the loop are connected to a terminal of the voltage source via a resistor (R4, R5), that the emitters of the two transistors (TE, TS) are interconnected and connected to the junction of the operating voltage source and the voltage source in the first detection circuit (DT1), that the base of the transistor (TS) for detecting closure of the loop is connected to the first constant-current source (K1) and that the base of the transistor (TE) for detecting operation of the ground key is connected to the junction of the voltage divider (R2, R3).

6. A circuit arrangement as claimed in Claim 5, characterized in that the emitters of the two transistors (TE, TS) are interconnected via two diodes (D4, D5) having opposite conductivity directions, and that the central control arrangement (ZSt) is connected to the common cathode junction of the two diodes (D4, D5).

7. A circuit arrangement for putting the method as claimed in Claims 1 and 2 into effect, characterized in that a second detection circuit (DT2) is connected to the first detection circuit (DT1), to the first constant-current source (K1), to a ringing signal generator (RGb) and to a contact (AKb) for feeding the ringing signal into the voice transmission conductors.

8. A circuit arrangement as claimed in Claim 6, characterized in that each ringing signal generator (RGb, RGa) is connected to one of the terminals of the operating voltage source (U, -U$_B$) and that one of the ringing signal generators (RGb) is connected by means of its other terminal via a resistor (R9) to the contact (AKb) and that the other ringing signal generator (RGa) is connected to the other contact (AKa).

9. A circuit arrangement as claimed in Claim 7, characterized in that a terminal of an RC-network (R8, C2) is connected to the junction of the resistor (R9) and the ringing signal generator (RGb), that the junction of the RC-network is connected to the base of a transistor (T2) and that the capacitor (C2) of the RC-network is arranged in parallel with the base-emitter path of the transistor (T2).

10. A circuit arrangement as claimed in Claim 8, characterized in that the collector of the transistor (T2) is connected to a further RC-network (R6, C1) via a diode (D3) and a resistor (R7), that the second terminal of the resistor (R6) of this RC-network is connected to the first constant-current source (K1) and to the cathode of a diode (D2) arranged between a first detection circuit (DT1) and a first constant-current source (K1), and that the second terminal of the capacitor (C1) of this RC-network is connected to a terminal of the voltage source in the first detection circuit (DT1).

11. A circuit arrangement for putting the method as claimed in Claims 1 and 2 into effect, characterized in that the test arrangement (Pr) is connected to terminals of an operating voltage source (U, -U$_B$), to a pair of terminals (b1, a1) and to the central control arrangement (ZSt).

12. A circuit arrangement as claimed in Claim 10, characterized in that always one terminal of the operating voltage source (U, -U$_B$) is connected to the pair of terminals (b1, a1) via a switching contact which can be closed by the central control arrangement (ZSt) and a resistor (RSb or RSa) to the pair of terminals (b1, a1) and that this pair of terminals (b1, a1) is connected to diode (Db or Da) via a diode (Db1, or Da1) which are arranged with opposite conductivity directions in the voice transmission conductors (b, a).

**Revendications**

1. Procédé pour enregistrer des critères de courant de boucle dans un système de télécommunication, selon lequel deux sources de courant constant (K1, K2) d'un circuit d'abonné, indépendantes l'une de l'autre et disposées symétriquement par rapport à un dispositif final d'abonné (Tln), maintiennent constant un courant de boucle, indépendamment de la longueur de ligne des fils téléphoniques (a, b) allant au dispositif final d'abonné (Tln), selon lequel, à l'aide d'un dispositif de mesure (R1), le courant de boucle passant dans les fils téléphoniques (a, b) est mesuré et, dans le cas de valeurs de courant différentes, des valeurs de tension de référence différentes pour les sources de courant constant (K1, K2) sont réglées au moyen d'un dispositif de réglage (R), selon lequel, dans le cas d'un décalage de symétrie qui ne peut plus être compensé par le dispositif de réglage (R), le courant de boucle est limité à une valeur maximale et le dispositif de réglage (R) est bloqué et selon lequel des moyens destinés à appeler le dispositif final d'abonné (Tln) sont branchés par un dispositif de commande central (ZSt), caractérisé en ce qu'au moins un circuit de détection (DT1, DT2) exploite, dans le cas d'une impulsion de terre, les signaux du dispositif de réglage (R) servant à régler les valeurs de tension de référence pour les sources de courant constant (K1, K2) et dans le cas d'une fermeture de boucle et de l'impulsion de boucle, les signaux du dispositif de mesure (R1) qui est monté dans le circuit de détection (DT1).

2. Procédé suivant la revendication 1, selon lequel un dispositif de vérification (Pr) est prévu pour la simulation du dispositif final d'abonné, caractérisé en ce que les signaux de sortie des circuits de détection (DT1, DT2) sont exploités par le dispositif de commande central (ZSt) dans un état libre de conversation d'un dispositif final d'abonné (Tln), le circuit d'abonné (Tln) et les circuits de détection (DT1, DT2) sont vérifiés par le dispositif de commande central (ZSt) par simulation du dispositif final d'abonné au moyen du dispositif de vérification (Pr).

3. Montage de circuit pour enregistrer des critères de courant de boucle dans un système de télécommunication en vue d'exécuter le procédé suivant les revendications 1 et 2, selon lequel deux sources de courant constant (K1, K2) d'un circuit d'abonné indépendantes l'une de l'autre et disposées symétriquement par rapport à un dispositif final d'abonné (Tln), maintiennent constant un courant de boucle indépendamment de la longueur de ligne des fils téléphoniques (a, b) allant au dispositif final d'abonné (Tln), selon lequel, à l'aide d'un dispositif de mesure (R1), le courant de boucle passant dans les fils téléphoniques (a, b) est mesuré et, dans le cas de valeurs de courant différentes, des valeurs de tension de référence différentes pour les sources de courant constant (K1, K2) sont réglées au moyen d'un dispositif de réglage (R), selon lequel, dans le cas d'un décalage de symétrie qui ne peut plus être compensé par le dispositif de réglage (R), le courant de boucle est limité à une valeur maximale et le dispositif de réglage (R) est bloqué et selon lequel des moyens destinés à appeler le dispositif final d'abonné (Tln) sont branchés par un dispositif de commande central (ZSt), caractérisé en ce qu'un premier circuit de détection (DT1) est connecté aux sources de courant constant (K1, K2) à un des deux dispositifs (Rel) destinés à produire des valeurs de tension de référence et au dispositif de réglage (R).

4. Montage de circuit suivant la revendication 3, caractérisé en ce que le premier circuit de détection (DT1) contient une source de tension (U) dont un pôle est connecté tant à la première source de courant constant (K1) qu'au dispositif (Rel) destiné à produire des valeurs de tension de référence et dont l'autre pôle est connecté, par l'intermédiaire d'une résistance (R1), à une première source de courant constant (K1) et, par l'intermédiaire d'un diviseur de tension (R2, R3), du trajet collecteur-émetteur d'un premier transistor (T1), ainsi que d'une diode (D1), à une seconde source de courant constant (K2) et la base du premier transistor (T1) est connectée au dispositif de réglage (R).

5. Montage de circuit suivant les revendications 3 et 4, caractérisé en ce qu'à un pôle de source de tension sont connectés, chaque fois par l'intermédiaire d'une résistance (R4, R5), un transistor (TE) pour reconnaître l'actionnement de la touche de terre et un transistor (TS) pour reconnaître la fermeture de boucle, les émetteurs des deux transistors (TE, TS) sont interconnectés et connectés à la borne commune de la source de tension de fonctionnement et de la source de tension dans le premier circuit de détection (DT1), la base du transistor (TS) destinée à reconnaître la fermeture de boucle, est connectée à la première source de courant constant (K1), et à la borne commune du diviseur de tension (R2, R3), est connectée la base du transistor (TE) pour reconnaître l'actionnement de la touche de terre.

6. Montage de circuit suivant la revendication 5, caractérisé en ce que les émetteurs des deux transistors (TE, TS) sont interconnectés par l'intermédiaire de deux diodes (D4, D5) connectées en opposition et, à la borne de cathode commune des deux diodes (D4, D5), est connecté le dispositif de commande central (ZSt).

7. Montage de circuit pour l'exécution du procédé suivant les revendications 1 et 2, caractérisé en ce qu'un second circuit de détection (DT2) est connecté à un premier circuit de détection (DT1), à la première source de courant constant (K1), à un générateur d'appels (RGb) et à un contact de branchement (AKb) pour lancer les appels dans les fils téléphoniques.

8. Montage de circuit suivant la revendication 6, caractérisé en ce que chaque générateur d'appels (RGb, RGa) est connecté à un des pôles de la source de tension de fonctionnement ($U_1$-$U_B$) et un des générateurs d'appels (RGb) est connecté par l'autre borne, par l'intermédiaire d'une résistance (R9), au contact de branchement (AKG) et l'autre générateur d'appels (RGa) est connecté à l'autre contact de branchement (AKa).

9. Montage de circuit suivant la revendication 7, caractérisé en ce qu'une borne d'un élément RC (R8, C2) est connectée à la borne commune de la résistance (R9) et du générateur d'appels (RGb), la borne commune de l'élément RC est branchée sur la base d'un transistor (T2) et le condensateur (C2) de l'élément RC est monté en parallèle avec le trajet base-émetteur du transistor (T2).

10. Montage de circuit suivant la revendication 6, caractérisé en ce que le collecteur du transistor (T2) est connecté, par l'intermédiaire d'une diode (D3) et d'une résistance (R7), à un autre élément RC (R6, C1), la deuxième borne de la résistance (R6) de cet élément RC est connectée à la première source de courant constant (K1) et à la cathode d'une diode (D2) disposée entre le premier circuit de détection (DT1) et la première source de courant constant (K1) et la deuxième borne du condensateur (C1) de cet élément RC est connectée à un pôle de la source de tension dans le premier circuit de détection (DT1).

11. Montage de circuit pour réaliser le procédé suivant les revendications 1 et 2, caractérisé en ce que le dispositif de vérification (Pr) est connecté aux pôles d'une source de tension de fonctionnement ($U_1$-$U_B$), à une paire de bornes (bl, al) et au dispositif de commande central (ZSt).

12. Montage de circuit suivant la revendication 10, caractérisé en ce qu'un pôle de la source de tension de fonctionnement ($U_1$-$U_B$) est branché chaque fois par l'intermédiaire d'un contact de branchement pouvant être fermé par le dispositif de commande central (ZSt) et d'une résistance (RSb ou RSa) à la paire de bornes (bl, al) et ces deux bornes (bl, al) sont connectées par l'intermédiaire chaque fois d'une diode (Dbl ou Dal) à une diode (Db ou Da) disposée en opposition dans la paire de fils téléphoniques (b, a).

FIG. 1

**0 079 463**

FIG. 2